# EUROPÄISCHE PATENTSCHRIFT

(11) **EP 2 398 589 B1**
(45) Veröffentlichungstag und Bekanntmachung des Hinweises auf die Patenterteilung: **12.03.2014**
(21) Anmeldenummer: 09810769.1
(22) Anmeldetag: 16.12.2009
(51) Int. Cl.: B01L 3/00, G01N 21/05, B65D 75/36, G01N 35/10

(54) **FLUSSZELLE MIT INTEGRIERTEM FLUIDSPEICHER**
FLOW CELL WITH INTEGRATED FLUID RESERVOIR
CELLULE D'ÉCOULEMENT AVEC RÉSERVOIR INTÉGRÉ DE FLUIDES

(30) Priorität: 19.02.2009 DE 102009009728
(43) Veröffentlichungstag der Anmeldung: 28.12.2011
(73) Patentinhaber: thinXXS Microtechnology AG, 66482 Zweibrücken (DE)
(72) Erfinder: WEBER, Lutz, 66424 Homburg (DE)
(74) Vertreter: Bernhardt, Reinhold
(86) Internationale Anmeldenummer: PCT/DE2009/001796
(87) Internationale Veröffentlichungsnummer: WO 2010/094249

(56) Entgegenhaltungen:
- EP-A2- 0 583 833
- WO-A1-02/068823
- DE-A1- 10 336 850
- DE-U1-202004 000 591
- US-A1- 2007 224 084

## Beschreibung

Die Erfindung betrifft eine Flusszelle mit integriertem Fluidspeicher, der zwei, auf einer Trägerfläche der Flusszelle angeordnete Folienlagen umfasst, die unter Einschluss eines Speicherraums und eines Transportkanals miteinander verbunden sind, wobei sich der Transportkanal von einer den Speicherraum verschließenden Berststelle zu einer Verbindungsöffnung erstreckt und durch strömendes Fluid aus dem Speicherraum aufschließbar ist.

Eine Flusszelle solcher Art geht aus der hier einbezogenen deutschen Patentanmeldung 10 2009 005 874.5 des Anmelders hervor. Der aus zwei Folienlagen bestehende Fluidspeicher ist über die der Trägerfläche zugewandte Folienlage mit der Trägerfläche verklebt. Im Bereich des Transportkanals liegen die Folienlagen unverklebt gegeneinander an. Erst nach Aufbruch der Berststelle aus dem Speicherraum einströmendes Fluid weitet den Transportkanal auf und es bildet sich ein Strömungsquerschnitt. Auf diese Weise lässt sich der Fluidspeicher dosiert und vor allem blasenfrei entleeren.

Der Erfindung liegt die Aufgabe zugrunde, eine neue Flusszelle der eingangs erwähnten Art zu schaffen, die sich mit verringertem Aufwand herstellen lässt.

Die diese Aufgabe lösende Flusszelle nach der Erfindung ist dadurch gekennzeichnet, dass die der Trägerfläche abgewandte Folienlage des Fluidspeichers über die der Trägerfläche zugewandte Folienlage des Fluidspeichers übersteht und in dem überstehenden Bereich mit der Trägerfläche verbunden ist.

Gemäß der Erfindung wird also ein überstehender Bereich der der Trägerfläche abgewandten Folienlage gebildet und zur Verbindung des Fluidspeichers mit der Trägerfläche genutzt. Vorteilhaft kann dabei ein verbindungsmittel, das der Verbindung der Folienlagen untereinander dient, auch zur Verbindung des Fluidspeichers mit der Trägerfläche eingesetzt werden.

Vorzugsweise ist der Fluidspeicher ausschließlich in dem überstehenden Bereich der der Trägerfläche abgewandten Folienlage mit der Trägerfläche verbunden, wobei vorzugsweise zwischen dem Fluidspeicher und der Trägerfläche und auch zwischen den Folienlagen eine Schweißverbindung besteht.

Vorteilhaft kann diese Schweißverbindung über einen aufschmelzbaren Belag der Folienlage bzw. Folienlagen, wie ihn die zur Herstellung von Blister-Verpackungen verwendeten Aluminiumfolien gewöhnlich aufweisen, hergestellt sein. Das heißt, z.B. eine Lack- oder Heißkleberschicht der Folien, mit deren Hilfe die Folienlagen miteinander verschweißt werden, lässt sich auch zum Verschweißen des Fluidspeichers mit der Trägerfläche nutzen, indem dieser Belag der der Trägerfläche abgewandten Folienlage in dem überstehenden Bereich der Trägerfläche zugewandt ist.

Die Trägerfläche kann durch eine ebene Oberfläche einer vorzugsweise plattenförmigen Flusszelle gebildet sein, wobei die ebene Oberfläche ggf. eine die der Trägerfläche zugewandte Folienlage bündig aufnehmende Vertiefung aufweist.

In einer Ausführungsform der Erfindung ist die der Trägerfläche abgewandte Folienlage zwecks Bildung des Speicherraums geeignet geformt und umfasst vorzugsweise eine Ausformung in Form einer Kalotte.

Alternativ kann die der Trägerfläche zugewandte Folienlage zwecks Bildung des Speicherraums geformt sein und die oben genannte plattenförmige Flusszelle weist eine diese Formung berücksichtigende Aussparung auf. Zum Beispiel tritt dann eine den Speicherraum bildende vorstehende Kalotte durch die als Plattendurchgang ausgebildete Aussparung hindurch und der Fluidspeicher ist zur Entleerung durch Ausquetschen zugänglich.

Die genannte Verbindungsöffnung kann direkt oder indirekt in Fluidverbindung mit einem zu der Trägerfläche senkrechten Durchgang oder/und einem zu der Trägerfläche parallelen Kanal der Flusszelle stehen.

In einer Ausführungsform der Erfindung ist der als Nut in der Plattenfläche gebildete Kanal durch den überstehenden Bereich der der Trägerfläche abgewandten Folienlage fluiddicht abgedeckt.

Zweckmäßig wird zur Herstellung der vorangehend beschriebenen Flusszelle der Fluidspeicher vorgefertigt und als ganzer mit der Trägerfläche der Flusszelle verbunden. Bei der Vorfertigung des Fluidspeichers unter Verbindung der Folienlagen kann die der Trägerfläche zugewandte Folienlage nach der Verbindung mit der anderen Folienlage durch begrenzten Stanzhub auf ihre endgültigen Maße ausgestanzt oder sogleich in ihren endgültigen Maßen mit der anderen Folienlage verbunden werden.

Mit Hilfe der vorangehend beschriebenen Flusszelle lassen sich Fluide in Mengen von wenigen Mikrolitern bis zu einigen Millilltern bereitstellen, verarbeiten und analysieren, wobei medizinische, diagnostische, analytische und kosmetische Anwendungen, Anwendungen in miniaturisierten Brennstoffzellen sowie im Bereich der Lebensmittelverpackung in Betracht kommen.

Die Erfindung wird nachfolgend anhand von Ausführungsbeispielen und der beiliegenden, sich auf diese Ausführungsbeispiele beziehenden Zeichnungen näher erläutert. Es zeigen:
- Fig. 1: ein erstes Ausführungsbeispiel für eine Flusszelle noch der Erfindung mit integriertem Fluidspeicher,
- Fig. 2: die Flusszelle von Fig. 1 in einer Explosionsdarstellung.
- Fig. 3 und 4: die Flusszelle von Fig. 1 in Verbindung mit einem Zusatzgerät,
- Fig. 5: ein Flusszellenarray mit Flusszellenabschnitten gemäß der Flusszelle von Fig. 1,
- Fig. 6: ein weiteres Ausführungsbeispiel für eine erfindungsgemäße Flusszelle,
- Fig. 7: die Flusszelle von Fig. 6 in Verbindung mit einem Zusatzgerät,
- Fig. 8: ein drittes Ausführungsbeispiel für eine Flusszelle nach der Erfindung,
- Fig. 9: ein viertes Ausführungsbeispiel für eine Flusszelle nach der Erfindung, und
- Fig. 10: die Flusszelle von fig. 9 in Verbindung mit einem Zusatzgerät.

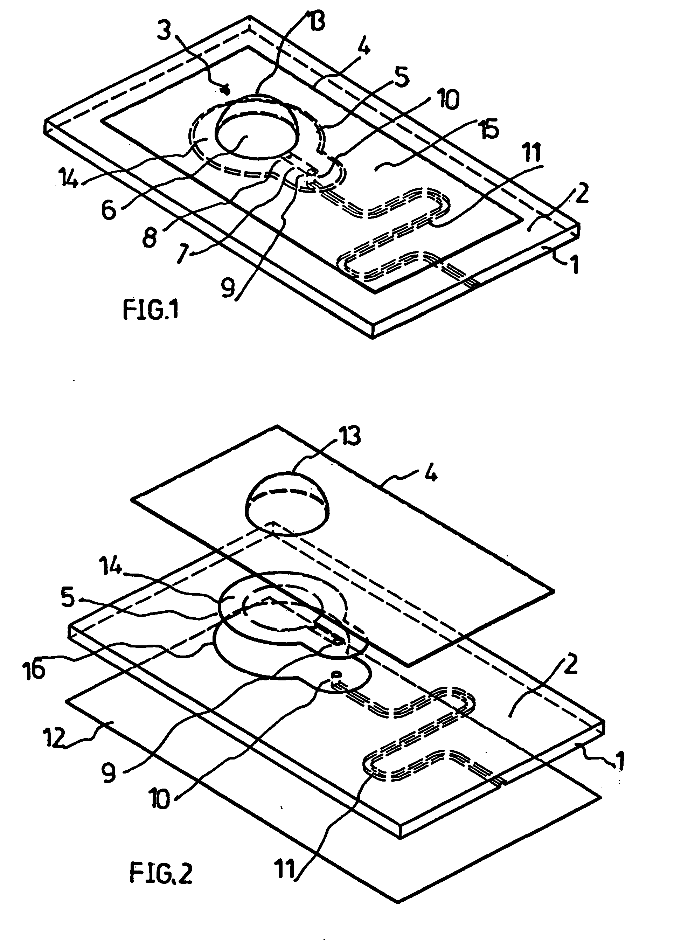

Eine in Fig. 1 gezeigte Flusszelle umfasst einen aus Kunststoff bestehenden Plattenkörper 1 mit einer Plattenfläche, die als Trägerfläche 2 für einen in die Flusszelle integrierten Fluidspeicher 3 dient.

Der Fluidspeicher 3 besteht aus zwei miteinander verbunden Folienlagen 4 und 5, zwischen denen ein Speicherraum 6 und ein Transportkanal 7 gebildet sind. Der Transportkanal 7 erstreckt sich von einer den Speicherraum 6 verschließenden Berststelle 8 bis zu einer Verbindungsöffnung 9. Zur Bildung des Speicherraums 6 ist die Folienlage 4 in Form einer Kalotte 13 ausgeformt.

Die Verbindungsöffnung 9 steht in Fluidverbindung mit einem zur Plattenebene senkrechten Durchgang 10, der in einen zur Plattenebene parallelen Kanal 11 der Flusszelle einmündet. Eine Abdeckfolie 12 auf der dem Fluidspeicher 3 abgewandten Plattenseite schließt den Kanal 11, der durch eine Nut im Plattenkörper 1 gebildet ist, nach außen fluiddicht ab.

Bei den Folienlagen 4,5 handelt es sich in dem gezeigten Ausführungsbeispiel um Aluminiumfolien mit einer schmelzbaren Beschichtung auf einer Seite, wie sie zur Herstellung von Blister-Verpackungen eingesetzt werden. Die Beschichtung besteht z.B. aus einem Lack, Heißkleber oder aufschmelzbarem Kunststoff wie PE oder PP.

Wie die Figuren 1 und 2 erkennen lassen, weist die der Trägerfläche. 2 abgewandte Folienlage 4 eine kalottenartige Ausformung 13 zur Bildung des Speicherraums 6 auf, während die der Trägerfläche 2 zugewandte Folienlage 5 innerhalb einer Vertiefung 16 durchgehend gegen die ebene Trägerfläche 2 anliegt. Die Figuren 1 und 2 zeigen ferner, dass sich die der Trägerfläche 2 abgewandte Folienlage 4 in einem Bereich 15 seitlich über die Folienlage 5 hinaus erstreckt.

Die Folienlagen 4,5 sind in einem um den Speicherraum 6 und den Transportkanal 7 geschlossen umlaufenden Bereich 14 über die genannte schmelzbare Beschichtung fluiddicht miteinander verschweißt. In ihrem über die Folienlage 5 überstehenden Bereich 15 ist über die gleiche Beschichtung eine fluiddichte Schweißverbindung zwischen der Folienlage 4 und der Trägerfläche 2 hergestellt.

Die Maße der Vertiefung 16 entsprechen etwa denen der Folienlage 5, wobei die lateralen Abmessungen der Vertiefung 16 etwas über die lateralen Abmessungen der Folienlage 5 hinausgehen.

Zur Herstellung der Flusszelle von Fig. 1 kann der aus den Folienlagen 4,5 bestehende Fluidspeicher 3 komplett vorgefertigt und die Folienlage 5 mit der vorab unter Bildung des Speicherraums 6 geformten Folienlage 4 verschweißt werden. Im Rahmen dieser Vorfertigung lässt sich die Berststelle 8 präzise so herstellen, dass sich der Speicherraum 6 bei einem vorbestimmten Innendruck zu dem Transportkanal 7 hin öffnet.

Die Folienlage 5 kann beim Verschweißen mit der Folienlage 4 bereits ihre endgültigen, in Fig. 1 und 2 gezeigten Abmessungen aufweisen. Einfacher lässt sich aber eine zu der Folienlage 4 zunächst deckungsgleiche Folie handhaben, aus der nach Verschweißen mit der Folienlage 4 im Bereich 14 die äußeren, nicht mit der Folienlage 4 verschweißten Bereiche durch geeignet begrenzten Stanzhub, d.h. nach dem Kiss-Cut-Verfahren, ausgestanzt werden.

Bei Ausübung eines Pressdrucks auf die Folienlage 4 im Bereich des Speicherraums 6 gelangt über die dadurch geöffnete Berststelle 8 Fluid in den Kanal 7, in dessen Bereich die Folienlagen 4 und 5 nicht miteinander verschweißt sind. Das einströmende Fluid weitet die aneinander anliegenden Folienlagen auf und erschließt sich so selbst einen Strömungsquerschnitt. Über die Verbindungsöffnung 9 gelangt das Fluid in den Durchgang 10 und damit in die Verarbeitungsbereiche der Flusszelle.

Die gezeigte Flusszelle dient nur als Beispiel und kann insbesondere über den gezeigten Durchgang 10 und den Kanal 11 hinaus weitere Hohlräume aufweisen.

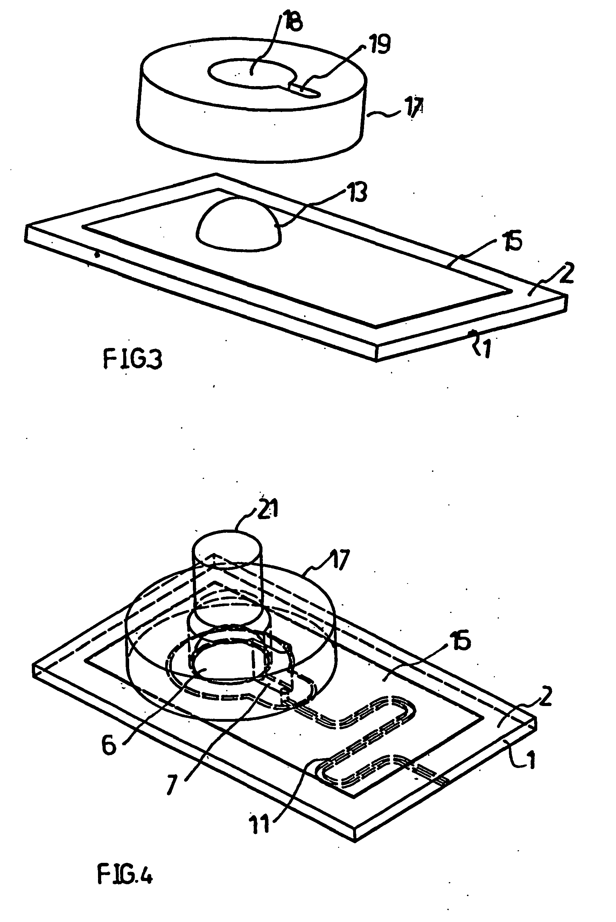

In der Umgebung der in der Folienlage 5 gebildeten Verbindungsöffnung 9 besteht keine Verbindung zwischen dem Fluidspeicher 3 und der Trägerfläche 2. Durch eine in Fig. 3 und 4 gezeigte Stempeleinrichtung 17 lässt sich verhindern, dass das Fluid durch die Verbindungsöffnung 9 hindurch nicht nur in den Durchgang 10 sondern auch zwischen die Folienlage 5 und die Trägerfläche 2 gelangt.

Das Stempelelement 17 weist einen Durchgang 18 auf, dessen Durchmesser dem Durchmesser des Speicherraums 6 bzw. der diesen bildenden kalottenartigen Ausformung 13 entspricht. Von dem Durchgang 18 erstreckt sich eine seitliche Ausbuchtung 19, deren Breite mit der Breite des Transportkanals 7 übereinstimmt.

Wie Fig. 4 erkennen lässt, drückt das Stempelelement 17 die Folienlagen 4,5 zusammen und gemeinsam gegen die Trägerfläche 2. Im Bereich des Speicherraums 6 und des Transportkanals 7, in dem die Folienlage 5 durch den Fluiddruck gegen die Trägerfläche 2 gedrückt wird, kann das Fluid durch die Verbindungsöffnung 9 hindurch nur in den Durchgang 10 und nicht zwischen die Folienlage 5 und die Trägerfläche 2 gelangen. Mit Hilfe eines in den Durchgang 18 eingeführten zylindrischen Dorns 21 lässt sich der Speicherraum 6 unter Ausstoß des Fluids zusammendrücken.

Zur Vergleichmäßigung des Andrucks kann das Stempelelement 17 an der Unterseite eine elastische Beschichtung aufweisen.

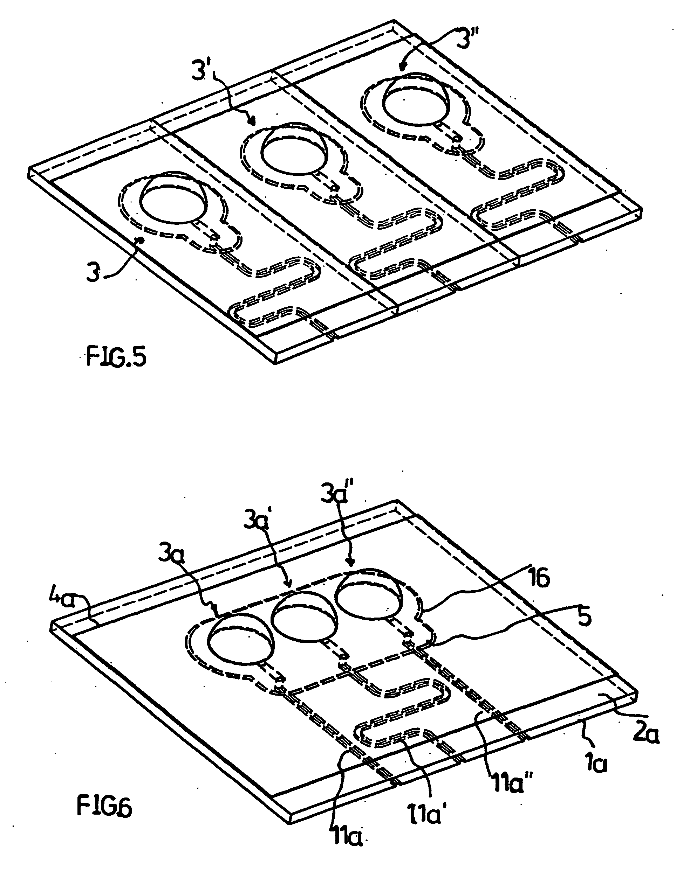

Fig. 5 zeigt eine Flusszelle, in der drei Zellen, die jeweils der vorangehend beschriebenen Flusszelle entsprechen, in einer Baueinheit vereint sind. Entsprechend weist die Flusszelle von Fig. 5 drei integrierte Fluidspeicher 3,3' und 3" auf.

Bei den folgenden Ausführungsbeispielen sind gleiche oder gleichwirkende Teile mit derselben Bezugszahl wie bei den vorangehenden Ausführungsbeispielen bezeichnet, wobei den betreffenden Teilen der Buchstabe a, b bzw. c beigefügt ist.

Eine in Fig. 6 gezeigte Flusszelle mit einem Plattenkörper 1a weist drei auf einer Trägerfläche 2a angeordnete Speicher 3a, 3a' und 3a" auf. Den drei Speichern sind eine Folienlage 4a und eine zwischen der Folienlage 4a und der Trägerfläche 2a angeordnete Folienlage 5a gemeinsam.

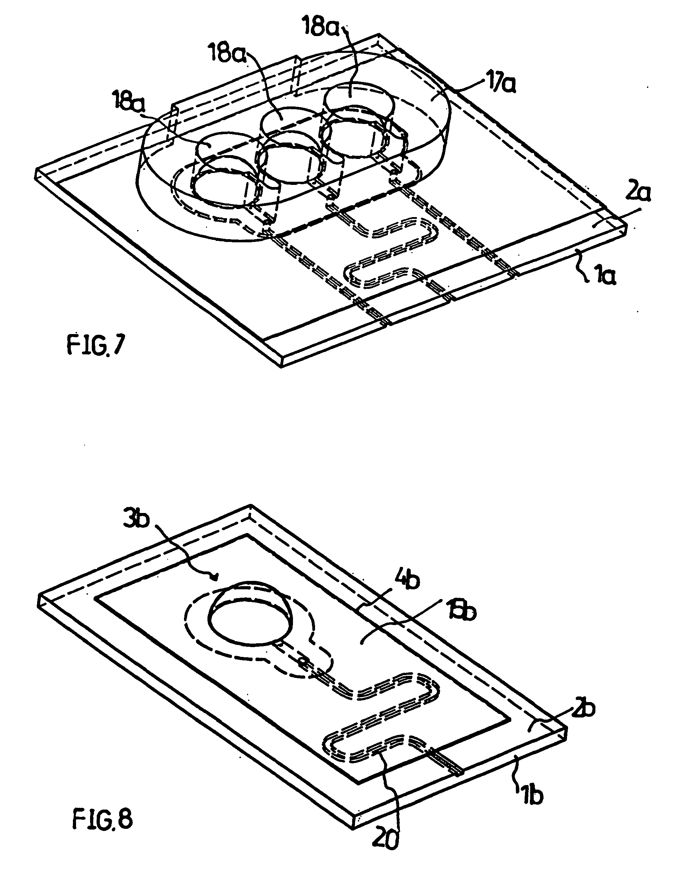

Wie aus Fig. 7 hervorgeht, kann zum Betrieb der Flusszelle von Fig. 6 ein Stempelelement 17a verwendet werden, in dem drei Durchgänge 18a, 18a' und 18a" entsprechend den drei Fluidspeichern 3a, 3a' und 3a" vorgesehen sind.

Ein in Fig. 8 gezeigtes Ausführungsbeispiel für eine Flusszelle mit einem Fluidspeicher 3b unterscheidet sich von der Flusszelle von Fig. 1 dadurch, dass eine Verbindungsöffnung 9b eines Transportkanals 7b nicht mit einem zur Platte senkrechten Durchgang sondern direkt mit einem an eine Trägerfläche 2b für den Fluidspeicher 3b angrenzenden Kanal 20 in Verbindung steht. Der durch eine Nut gebildete Kanal ist nach außen durch einen überstehenden Verbindungsbereich 15b einer der Trägerfläche 2b abgewandten Folienlage 4b abgedeckt.

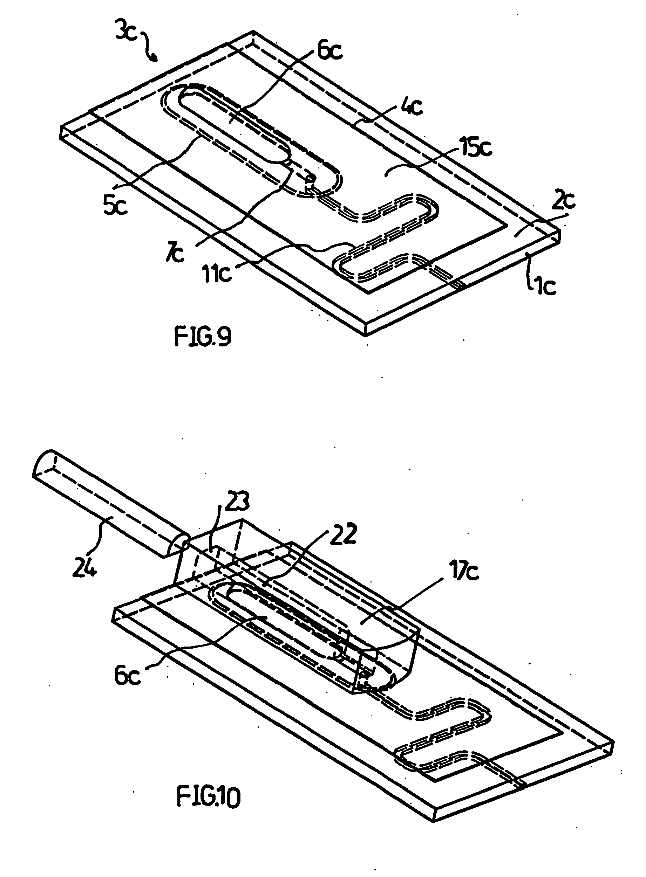

Ein in Fig. 9 gezeigtes Ausführungsbeispiel für eine Flusszelle weist einen länglichen Speicherraum 6c auf. Entsprechend ist gemäß Fig. 10 ein Stempelelement 17c mit einer länglichen Ausnehmung 22 auf seiner dem Speicherraum 6c zugewandten Seite versehen. In die an einem Ende bei 23 offene Ausnehmung 22 lässt sich ein länglicher Schieber 24 einführen, durch den sich der Speicherraum 6 in seiner Längsrichtung fortschreitend zusammenquetschen lässt. Mit Hilfe des Schiebers 24 kann daher der Speicherraum 6c ähnlich einer Spritze entleert werden, die eine genaue Dosierung dadurch ermöglicht, dass durch einen langen Verschiebungsweg des Schiebers 24 nur ein geringes Fluidvolumen pro Wegeinheit der Verschiebung ausgestoßen wird.

Es versteht sich, dass der oder die Speicher der vorangehend beschriebenen Flusszellen auch die in der einbezogenen Anmeldung 10 2009 005 874.5 dargestellten Zusatzfunktionen aufweisen kann bzw. können.

## Patentansprüche

1. Flusszelle mit integriertem Fluidspeicher (3), der zwei, auf einer Trägerfläche (2) der Flusszelle angeordnete Folienlagen (4,5) umfasst, die unter Einschluss eines Speicherraums (6) und eines Transportkanals (7) miteinander verbunden sind, wobei sich der Transportkanal (7) von einer den Speicherraum (6) verschließenden Berststelle (8) zu einer Verbindungsöffnung (9) erstreckt und durch strömendes Fluid aus dem Speicherraum aufschließbar ist, **dadurch gekennzeichnet,**
**dass** die der Trägerfläche (2) abgewandte Folienlage (4) des Fluidspeichers (3) über die der Trägerfläche (2) zugewandte Folienlage (5) des Fluidspeichers (3) übersteht und in dem überstehenden Bereich (15) mit der Trägerfläche (2) verbunden ist.

2. Flusszelle nach Anspruch 1,
**dadurch gekennzeichnet,**
**dass** der Fluidspeicher (3) ausschließlich über den überstehenden Bereich (15) mit der Trägerfläche (2) verbunden ist.

3. Flusszelle nach Anspruch 1 oder 2,
**dadurch gekennzeichnet,**
**dass** zwischen dem Fluidspeicher (3) und der Trägerfläche (2) sowie vorzugsweise auch zwischen den Folienlagen (4,5) eine Schweißverbindung besteht.

4. Flusszelle nach Anspruch 3,
**dadurch gekennzeichnet,**
**dass** die Schweißverbindung über einen aufschmelzbaren Belag der Folienlage (4) bzw. Folienlagen (4,5) hergestellt ist.

5. Flusszelle nach Anspruch 4,
**dadurch gekennzeichnet,**
**dass** durch die Verschweißung überden aufschmelzbaren Belag eine fluiddichte Verbindung sowohl der Folienlagen (4,5) untereinander als auch in dem überstehenden Bereich (15) zwischen dem Fluidspeicher (3) und der Trägerfläche (2) gebildet ist.

6. Flusszelle nach einem der Ansprüche 1 bis 5,
**dadurch gekennzeichnet,**
**dass** die Trägerfläche (2) durch eine ebene Oberfläche einer vorzugsweise plattenförmigen Flusszelle gebildet ist.

7. Flusszelle nach einem der Ansprüche 1 bis 6,
**dadurch gekennzeichnet,**
**dass** die der Trägerfläche (2) abgewandte Folienlage (4) eine vorzugsweise kalottenartige oder längliche, den Speicherraum (6) bildende Formung (13) aufweist.

8. Flusszelle nach Anspruch 6 oder 7,
**dadurch gekennzeichnet,**
**dass** die der Trägerfläche zugewandte Folienlage eine den Speicherraum bildende Formung und die plattenförmige Flusszelle eine die Formung berücksichtigende Aussparung aufweist.

9. Flusszelle nach einem der Ansprüche 1 bis 8,
**dadurch gekennzeichnet,**
**dass** die Verbindungsöffnung (9) direkt oder indirekt in Fluidverbindung mit einem zu der Trägerfläche (2) senkrechten Durchgang (10) oder/und zu der Trägerfläche (2) parallelen Kanal (11,20) der Flusszelle steht.

10. Flusszelle nach Anspruch 9,
**dadurch gekennzeichnet,**
**dass** der Kanal (20) durch den überstehenden Bereich (15b) der der Trägerfläche (2b) abgewandten Folienlage (4b) fluiddicht abgedeckt ist.

11. Flusszelle nach einem der Ansprüche 1 bis 10,
**dadurch gekennzeichnet,**
**dass** ein den Fluidspeicher (3) gegen die Trägerfläche (2) pressendes Stempelelement (17) mit einer den Speicherraum (6) aufnehmenden Aussparung (18,22) und ggf. ein in die Aussparung einführbares Schieberelement (21,24) vorgesehen ist.

12. Flusszelle nach Anspruch 11,
**dadurch gekennzeichnet,**
**dass** die Aussparung entsprechend dem Speicherraum (6c) länglich ausgebildet ist und an einem Ende eine Öffnung für die Einführung eines länglichen Schieberelements (24) aufweist.

13. Verfahren zur Herstellung einer Flusszelle mit integriertem Fluidspeicher (3), der zwei auf einer Trägerfläche (2) der Flusszelle angeordnete Folienlagen (4,5) umfasst, die unter Einschluss eines Speicherraums (6) und eines Transportkanals (7) miteinander verbunden sind, wobei die der Trägerfläche abgewandte Folienlage (4) über die der Trägerfläche zugewandte Folienlage (5) des Fluidspeichers übersteht,
**dadurch gekennzeichnet,**
**dass** der Fluidspeicher (3) unter Verbindung der Folien (4,5) vorgefertigt und der vorgefertigte Fluidspeicher (3) mit der übrigen Flusszelle in dem überstehenden Bereich (15) mit der Trägerfläche verbunden wird, wobei im Rahmen der Vorfertigung die der Trägerfläche (2) zugewandte Folienlage (5) im verbundenen Zustand mit der anderen Folienlage (4) auf ihre endgültigen Maße unter Begrenzung des Stanzhubes (Kiss-Cut-Verfahren) ausgestanzt oder diese Folienlage (5) in ihren endgültigen Maßen mit der anderen Folienlage (4) verbunden wird.

## Claims

1. Flow cell with an integrated fluid reservoir (3), which comprises two film layers (4, 5) arranged on a support surface (2) of the flow cell and connected to each other to enclose a storage space (6) and a transport channel (7), wherein the transport channel (7) extends from a bursting point (8) closing the storage space (6) to a connecting opening (9), and can be opened by fluid flowing out of the storage space, **characterized in that** the film layer (4) of the fluid reservoir (3) that is facing away from the support surface (2) projects beyond the film layer (5) of the fluid reservoir (3) that is facing towards the support surface (2), and is connected to the support surface (2) in the projecting area (15).

2. Flow cell according to Claim 1, **characterized in that** the fluid reservoir (3) is connected to the support surface (2) exclusively by way of the projecting area (15).

3. Flow cell according to Claim 1 or 2, **characterized in that** there is a welded connection between the fluid reservoir (3) and the support surface (2) and preferably also between the film layers (4, 5).

4. Flow cell according to Claim 3, **characterized in that** the welded connection is produced by a fusible coating on the film layer (4) or film layers (4, 5) .

5. Flow cell according to Claim 4, **characterized in that** the welding by way of the fusible coating results in formation of a fluidtight connection both between the film layers (4, 5) and between the fluid reservoir (3) and the support surface (2) in the projecting area (15).

6. Flow cell according to one of Claims 1 to 5, **characterized in that** the support surface (2) is formed by a planar surface of a preferably sheet-like flow cell.

7. Flow cell according to one of Claims 1 to 6, **characterized in that** the film layer (4) facing away from the support surface (2) has a preferably dome-like or oblong formation (13), forming the storage space (6).

8. Flow cell according to Claim 6 or 7, **characterized in that** the film layer facing towards the support surface has a shaping forming the storage space and the sheet-like flow cell has a depression allowing for the shaping.

9. Flow cell according to one of Claims 1 to 8, **characterized in that** the connecting opening (9) is directly or indirectly in fluid connection with a passage (10) that is perpendicular to the support surface (2) and/or channel (11, 20) of the flow cell that is parallel to the support surface (2).

10. Flow cell according to Claim 9, **characterized in that** the channel (20) is covered in a fluidtight manner by the projecting area (15b) of the film layer (4b) facing away from the support surface (2b).

11. Flow cell according to one of Claims 1 to 10, **characterized in that** a die element (17) that presses the fluid reservoir (3) against the support surface (2) and has a depression (18, 22) that accommodates the storage space (6) and possibly a sliding element (21, 24) that can be inserted into the depression is provided.

12. Flow cell according to Claim 11, **characterized in that** the depression takes an oblong form corresponding to the storage space (6c) and has an opening at one end for insertion of an oblong sliding element (24).

13. Method for producing a flow cell with an integrated fluid reservoir (3), which comprises two film layers (4, 5) arranged on a support surface (2) of the flow cell and connected to each other to enclose a storage space (6) and a transport channel (7), wherein the film layer (4) that is facing away from the support surface projects beyond the film layer (5) of the fluid reservoir that is facing towards the support surface, **characterized in that** the fluid reservoir (3) is prefabricated with the films (4, 5) connected and the prefabricated fluid reservoir (3) with the remainder of the flow cell is connected to the support surface in the projecting area (15), wherein, in the course of the prefabrication, the film layer (5) that is facing the support surface (2) is punched out to its final size while in the state of being connected to the other film layer (4), and with the punching stroke being limited (kiss-cut method), or this film layer (5) in its final dimensions is connected to the other film layer (4).

## Revendications

1. Cellule d'écoulement dotée d'un réservoir à fluide intégré (3), qui comprend deux couches (4,5) de feuille disposées sur une surface support (2) de la cellule d'écoulement, qui sont assemblées l'une à l'autre en incluant un espace réservoir (6) et un canal de transport (7), le canal de transport (7) s'étendant d'un site de rupture (8) fermant l'espace réservoir (6) jusqu'à une ouverture de raccordement (9) et pouvant être ouvert par du fluide qui s'écoule hors de l'espace réservoir, caractérisée en ce la que couche (4) de feuille opposée à la surface support (2) du réservoir à fluide (3) dépasse de la couche (5) de feuille face à la surface support (2) du réservoir à fluide (3) et est assemblée dans la zone qui dépasse (15) à la surface support (2).

2. Cellule d'écoulement selon la revendication 1, **caractérisée en ce que** le réservoir à fluide (3) est assemblé exclusivement via la zone qui dépasse (15) à la surface support (2).

3. Cellule d'écoulement selon la revendication 1 ou 2, **caractérisée en ce qu'**il existe un assemblage par soudage entre le réservoir à fluide (3) et la surface support (2) ainsi que de préférence aussi entre les couches (4,5) de feuille.

4. Cellule d'écoulement selon la revendication 3, **caractérisée en ce que** l'assemblage par soudage est réalisé via une garniture fusible de la couche (4) ou des couches (4,5) de feuille.

5. Cellule d'écoulement selon la revendication 4, **caractérisée en ce que** le soudage via la garniture fusible forme un assemblage étanche aux fluides des couches (4,5) de feuille l'une avec l'autre ainsi que dans la zone qui dépasse (15) entre le réservoir à fluide (3) et la surface support (2).

6. Cellule d'écoulement selon l'une quelconque des revendications 1 à 5, **caractérisée en ce que** la surface support (2) est formée par une surface plane d'une cellule d'écoulement de préférence en forme de plaque.

7. Cellule d'écoulement selon l'une quelconque des revendications 1 à 6, **caractérisée en ce que** la couche (4) de feuille opposée à la surface support (2) présente de préférence une forme façonnée (13) de type calotte ou allongée, formant l'espace réservoir (6).

8. Cellule d'écoulement selon la revendication 6 ou 7, **caractérisée en ce que** la couche de feuille face à la surface support présente une forme façonnée, formant l'espace réservoir, et la cellule d'écoulement en forme de plaque présente un évidement tenant compte de la forme façonnée.

9. Cellule d'écoulement selon l'une quelconque des revendications 1 à 8, **caractérisée en ce que** l'ouverture de raccordement (9) est en liaison fluidique directe ou indirecte avec un passage (10) perpendiculaire à la surface support (2) et/ou avec un canal (11,20) parallèle à la surface support (2).

10. Cellule d'écoulement selon la revendication 9, **caractérisée en ce que** le canal (20) est recouvert de manière étanche aux fluides par la zone qui dépasse (15b) de la couche (4b) de feuille opposée à la surface support (2b).

11. Cellule d'écoulement selon l'une quelconque des revendications 1 à 10, **caractérisée en ce qu'**elle présente un élément de type poinçon (17), présentant un évidement (18,22) recevant l'espace réservoir (6), pressant le réservoir à fluide (3) contre la surface support (2), et le cas échéant un élément curseur (21,24) pouvant être introduit dans l'évidement.

12. Cellule d'écoulement selon la revendication 11, **caractérisée en ce que** l'évidement est de forme allongée, conformément à l'espace réservoir (6c), et présente, en une extrémité, une ouverture pour l'introduction d'un élément curseur (24) allongé.

13. Procédé de fabrication d'une cellule d'écoulement dotée d'un réservoir à fluide intégré (3), qui comprend deux couches (4,5) de feuille disposées sur une surface support (2) de la cellule d'écoulement, qui sont assemblées l'une à l'autre en incluant un espace réservoir (6) et un canal de transport (7), la couche (4) de feuille opposée à la surface support s'étendant au-delà de la couche (5) de feuille face à la surface support du réservoir à fluide, **caractérisé en ce que** le réservoir à fluide (3) est préfabriqué en assemblant les feuilles (4,5) et le réservoir à fluide (3) préfabriqué est assemblé au reste de la cellule d'écoulement dans la zone qui dépasse (15) à la surface support, la couche (5) de feuille face à la surface support (2) étant découpée, dans la cadre de la préfabrication, à l'état assemblé à l'autre couche (4) de feuille, à sa dimension finale en limitant la course de découpage (procédé Kiss-Cut) ou cette couche (5) de feuille étant assemblée dans ses dimensions finales à l'autre couche (4) de feuille.
